(19) 

Europäisches Patentamt

European Patent Office

Office européen des brevets

(11) **EP 4 545 603 A1**

(12) **EUROPEAN PATENT APPLICATION**
published in accordance with Art. 153(4) EPC

(43) Date of publication:
30.04.2025 Bulletin 2025/18

(21) Application number: 24812683.1

(22) Date of filing: 29.05.2024

(51) International Patent Classification (IPC):
*C09B 61/00* (2006.01)    *C09B 67/54* (2006.01)

(86) International application number:
PCT/CN2024/095878

(87) International publication number:
WO 2025/044342 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 CN 202311110664

(71) Applicant: China Agricultural University
Beijing 100083 (CN)

(72) Inventors:
• WEN, Xin
Haidian District
Beijing 100083 (CN)
• WU, Fan
Haidian District
Beijing 100083 (CN)

• CHEN, Nan
Haidian District
Beijing 100083 (CN)
• LI, Xilong
Haidian District
Beijing 100083 (CN)
• LIU, Xingyu
Haidian District
Beijing 100083 (CN)
• LI, Mo
Haidian District
Beijing 100083 (CN)
• PENG, Yu
Haidian District
Beijing 100083 (CN)
• NI, Yuanying
Haidian District
Beijing 100083 (CN)

(74) Representative: Vitina, Maruta et al
Agency TRIA ROBIT
P.O. Box 22
1010 Riga (LV)

(54) **GREEN EXTRACTION METHOD FOR CHROMOPLAST, RESULTING PRODUCT AND USE**

(57) A method for extracting chromoplasts is provided. Plant tissues are added with an extraction solvent, homogenized and filtered to collect a filtrate, which is further centrifuged. The supernatant is discarded, and the precipitate is collected as a crude extract. The crude extract is subjected to gradient separation with a series of sucrose solutions. A chromoplast-enriched layer is pipetted, added with the extraction solvent and centrifuged. The precipitate is collected as a purified chromoplast extract. A chromoplast extract obtained by the method and an application thereof are also provided.

EP 4 545 603 A1

Fig. 1

## Description

### TECHNICAL FIELD

This application relates to extraction of natural chromoplasts, and more particularly to a method for extracting chromoplasts from various plant tissues, and an extracted chromoplast and an application thereof.

### BACKGROUND

Carotenoids are the most abundant natural pigments except chlorophyll, which are yellow, orange or red tetraterpenoids. There are more than 750 species of carotenoids widely found in animals, plants, microorganisms and algae. As one of the pigment components, carotenoids can not only play a key role in the evaluation of the appearance and nutritional quality of food, but also promote human health and reduce the risk of disease. They can function as the provitamin A to be converted into vitamin A *in vivo,* and have a series of physical activities, such as antioxidant, immunomodulatory, and prevention of cardiovascular diseases. They have been extensively demonstrated to play a crucial role in promoting functions of the visual and nervous systems. For example, zeaxanthin (ZEA), as one of the most common carotenoids in edible plants, is an indispensable component of the retinal macular pigment. It has been shown that regular intake of ZEA-rich foods can effectively prevent eye diseases and improve human cognitive function (Izumi-Nagai, K., Nagai, N. & Ohgami, K. Macular pigment lutein is anti-inflammatory in preventing choroidal neovascularization. Arteriosclerosis, Thrombosis, and Vascular Biology, 2007, 27, 2555-2562. DOI:10.1161/ATVBAHA.107.151431; Lopresti, A. L., Smith, S. J. & Drummond, P. D. The effects of lutein and ZEA supplementation on cognitive function in adults with self-reported mild cognitive complaints: A randomized, double-blind, placebo-controlled study. Frontiers in Nutrition, 2022, 9, 843512. DOI:10.3389/fnut.2022.843512). Therefore, natural carotenoids are expected to become promising colorants in the food industry due to their excellent coloring properties and high nutritional value for human health.

Chromoplasts are plant organelles with a phospholipid bilayer membrane structure, in which carotenoids are biosynthesized and accumulated. Chromoplasts can be classified into globular, tubular, membranous and crystalline types according to the substructure of the carotenoids stored therein. The carotenoids may exist in the form of lipid-soluble, liquid crystal or crystal aggregates. Different aggregation states of carotenoid molecules can cause changes in the visible light absorption spectrum (Claudio L, Ilaria B, Marco E. Novel food colorants from tomatoes: Stability of carotenoid-containing chromoplasts under different storage conditions[J]. LWT-Food Science and Technology, 2021, 140(11): 110725. DOI: 10.1016/j.lwt.2020.110725). Compared with free monomers, chromoplast substructures may cause visual color changes of carotenoids. In addition, chromoplasts have a phospholipid bilayer membrane similar to liposomes, which can improve the water solubility and stability of carotenoids to some extent. It has been found that under different storage conditions, tomato chromoplasts were more stable than free carotenoid extracts from tomatoes in terms of color properties and carotenoid preservation (WANG Yongqiang, YANG Yong, FEI Zhangjun, et al. Proteomic analysis of chromoplasts from six crop species reveals insights into chromoplast function and development[J]. Journal of Experimental Botany, 2013, 64(4): 949-61. DOI:10.1093/jxb/ers375). Therefore, due to their natural structural advantages, chromoplasts exhibit great potential as natural water-soluble colorants and food additives in addressing the lipid solubility limitations of carotenoids.

During the solvent extraction or ultrasound-assisted extraction, natural carotenoids will be released from chromoplasts, and subsequentially dissolved in the solvent. Carotenoids extracted by organic solvents have extremely poor water solubility due to their lipophilicity, and therefore barely soluble in water. Moreover, during the storage period, the exposure to high temperature, ultraviolet and oxygen free radicals will cause isomerization, oxidation and degradation of carotenoids. As a result, the application of carotenoid extracts is usually limited. Delivery systems, especially microcapsules and nanocapsules, have been developed to improve the water dispersibility, stability and even bioavailability of carotenoids. However, microcapsules and nanocapsules have complex preparation processes, high costs and poor biocompatibility. Therefore, using a green and environmentally-friendly solvent to directly extract natural encapsulation systems (i.e., chromoplast) from plants is considered a more economical and effective approach.

### SUMMARY

In view of the defects of the prior art, a first object of the present disclosure is to provide a chromoplast extraction method, which is applicable to the extraction of chromoplasts in any structural form.

A second object of the present disclosure is to provide a product obtained by such extraction method.

A third object of the present disclosure is to provide an application of the extracted chromoplast.

In order to achieve the above objects, the following technical solutions are adopted.

In a first aspect, this application provides a method for extracting chromoplasts, which can be applied to the extraction of chromoplasts in any structural form, comprising:

(1) mixing a plant tissue with an extraction solvent followed by homogenization using a spiral juice extractor to obtain a mixture; wherein the extraction solvent is selected from the group consisting of purified water, a first sucrose solution, a phosphate buffered saline (PBS), a sorbitol extraction buffer and a combination thereof; a concentration of the first sucrose solution and a concentration of the sorbitol extraction buffer are each independently 0.3-0.4 mol/L; the sorbitol extraction buffer comprises 0.001-0.002 mol/L of ethylenediaminetetraacetic acid disodium salt (EDTA-Na$_2$) and 10-100 mL/L of a 4-(2-hydroxyethyl)-1-piperazine ethanesulfonic acid (HEPES) buffer; and the plant tissue is a carotenoid-rich tissue selected from the group consisting of goji berries, *Physalis alkekengi* fruit, *Physalis pubescens* fruit, marigold, sweet potato, daffodil, papaya, watermelon, corn, pepper, citrus fruit, pumpkin, tomato, carrot, mango, palm fruit and a combination thereof;

(2) filtering the mixture through a filter cloth arranged in 1-3 layers to collect a filtrate; and

(3) subjecting the filtrate to centrifugal separation at 3-8°C, discarding a supernatant, and collecting a precipitate as a crude chromoplast extract.

In some embodiments, in step (1), the goji is a fresh or dried goji tissue; and/or a ratio of a weight of the plant tissue to a volume of the extraction solvent is 1 (g):5-25 (mL). In an embodiment, the ratio of the weight of the plant tissue to the volume of the extraction solvent is 1 (g): 10 (mL).

In some embodiments, in step (1), the spiral juice extractor is set to a power of 200-500 W to perform the homogenization, and is intermittently operated 2-5 times, each lasting for 1 s. In some embodiments, in step (2), the filter cloth is one or two selected from the group consisting of an ordinary filter cloth, an 80-mesh cheese cloth, a 120-mesh cheese cloth, a 200-mesh cheese cloth and Miracloth™.

In some embodiments, the method further comprises:

(4) subjecting the crude chromoplast extract to freeze-drying or separation with a second sucrose solution; wherein the freeze-drying is performed using a freeze dryer at a temperature of -30 to - 50°C; and the second sucrose solution has a weight concentration of 5-50%.

In some embodiments, the method comprises:

(1) mixing the plant tissue with the extraction solvent followed by homogenization using the spiral juice extractor to obtain the mixture; wherein the extraction solvent is the PBS having a concentration of 0.01 M and a pH of 7.2-7.4, and the ratio of the weight of the plant tissue to the volume of the extraction solvent is 1 (g): 10-25 (mL);

(2) filtering the mixture through the ordinary filter cloth arranged in 2 layers to collect the filtrate;

(3) subjecting the filtrate to centrifugal separation at 3-5°C and 3,000-6,000×g for 10-30 min, discarding the supernatant, and collecting the precipitate as the crude chromoplast extract; and

(4) subjecting the crude chromoplast extract to separation with the second sucrose solution having the weight concentration of 5-50%.

In some embodiments, in step (3), the centrifugal separation is performed at 3,000×g for 15-20 min.

In some embodiments, the step (4) is performed through steps of:
resuspending the crude chromoplast extract with the sorbitol extraction buffer or the PBS to collect a resuspension solution; adding the resuspension solution to the second sucrose solution followed by horizontal centrifugation at 3-5°C and 4,000-5,800×g for 25-50 min, wherein a volume ratio of the resuspension solution to the second sucrose solution is 1:2-3; pipetting a chromoplast-enriched layer followed by dilution with the sorbitol extraction buffer or the PBS and centrifugation at 3-5°C and 3,000-6,000×g for 10-30 min, discarding a supernatant, and collecting a precipitate as a purified chromoplast extract. In this step, conditions of the centrifugation and washing times have no significant influence on the separation results. The operation of washing off the sucrose can be repeated 1-3 times, and the dilution can be 5-20 times.

In some embodiments, in step (4), the addition of the second sucrose solution is performed by adding a 50 wt.% sucrose solution, and subsequentially adding a 5-20 wt.% sucrose solution, and a volume ratio of the 50 wt.% sucrose solution to the resuspension solution and a volume ratio of the 5-20 wt.% sucrose solution to the resuspension solution are each independently (1-1.5):1.

In some embodiments, the 5-20 wt.% sucrose solution is a 20 wt.% sucrose solution.

In a second aspect, this application provides a chromoplast obtained by the above method. In a third aspect, this application provides an application of the chromoplast for use of preparing a cosmetic, a mooncake, a candy snack, a beverage, a baked product, or a meat product.

Compared to the prior art, the present disclosure has the following beneficial effects.

The method provided in this application is applicable to the preparation of water-soluble carotenoid ingredients. (1) A crude chromoplast extract is obtained from a plant tissue. (2) The crude chromoplast extract is subjected to gradient separation with sucrose solution to obtain a purified chromoplast extract having approximately uniform size, shape and density. (3) The purified chromoplast extract is dissolved in water to prepare a water-soluble carotenoid ingredient.

Compared with carotenoids extracted with organic reagents, the chromoplast extract obtained by the extraction technique of the present disclosure has no significant difference in oil solubility, but has significantly superior water solubility and rehydration ratio. Therefore, in addition to retaining the chromoplast properties, the chromoplast obtained herein also exhibits excellent water solubility, which not only facilitates the improvement of its applicability, but also is more environmentally friendly.

By means of the gradient sucrose extraction, a more complete and purifiedrified chromoplast is collected. Moreover, the aqueous solution system prepared by the resultant chromoplast has a higher stability.

## BRIEF DESCRIPTION OF THE DRAWINGS

The accompanying drawings provided herein constitute a part of the specification, which are used for explaining the principles of the present disclosure in conjunction with the embodiments, but are not intended to limit the scope of this application.

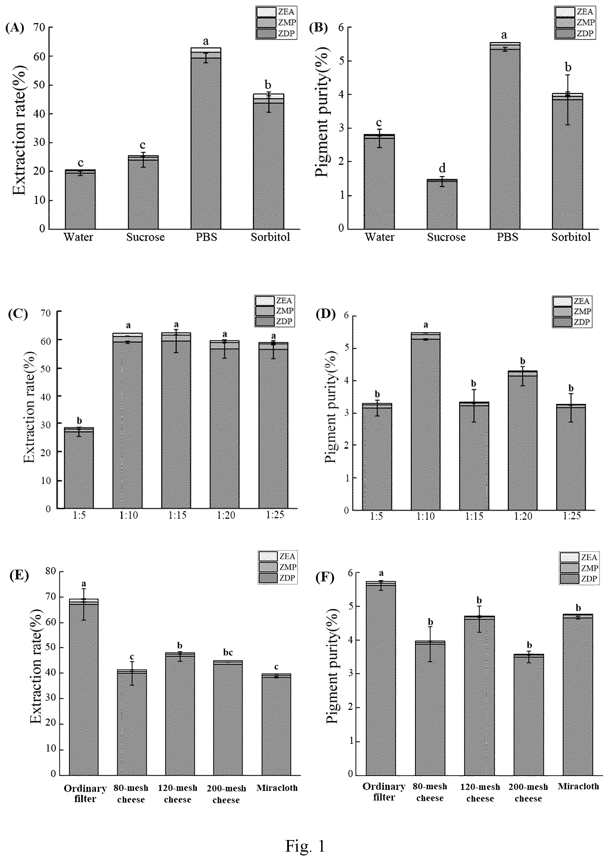

Fig. 1 shows extraction rate of goji chromoplasts and purity of goji pigments obtained under different parameters; where (A) shows extraction rate of goji chromoplasts obtained with different extraction solvents, (B) shows purity of the goji pigments obtained with different extraction solvents, (C) shows extraction rate of goji chromoplasts obtained at different solid (goji tissue)-liquid (extraction solvent) ratios, (D) shows purity of the goji pigments obtained at different solid-liquid ratios, (E) shows extraction rate of goji chromoplasts obtained with different filter cloths, and (F) shows purity of the goji pigments obtained with different filter cloths;

Fig. 2 shows extraction rate of goji chromoplasts and purity of goji pigments from dried goji in accordance with Example 3 of the present disclosure;

Fig. 3 shows comparison of rehydration ratios of goji chromoplasts processed by different separation methods;

Fig. 4 is optical microscopic (OM) images of goji chromoplast extracts separated with different sucrose solutions, where (a): without sucrose gradient separation; (b): separation with a 30 wt.% sucrose solution, (c): separation with a 40 wt.% sucrose solution; and (d): separation with a 50 wt.% sucrose solution;

Fig. 5 shows solubility of different goji pigment and chromoplast samples in water, where a: organic reagent-extracted goji pigment; b: crude extract of goji chromoplasts not separated by sucrose solution; c: purified extract of goji chromoplasts separated by 30% sucrose solution; d: purified extract of goji chromoplasts separated by 40% sucrose solution; and e: purified extract of goji chromoplasts separated by 50% sucrose separation;

Fig. 6 shows solubility of different goji pigment and chromoplast samples in light petroleum, where a: organic reagent-extracted goji pigment; b: crude extract of goji chromoplasts not separated by sucrose solution; c: purified extract of goji chromoplasts separated by 30% sucrose solution; d: purified extract of goji chromoplasts separated by 40% sucrose solution; and e: purified extract of goji chromoplasts separated by 50% sucrose separation;

Fig. 7 is OM images of goji chromoplast extracts obtained by gradient separation using 5-20%/50% sucrose solutions in accordance with Example 6 of the present disclosure; where (A): 5%/50% sucrose solution gradient; (B): 7.5%/50% sucrose solution gradient; (C): 10%/50% sucrose solution gradient; (D): 12%/50% sucrose solution gradient; (E): 15%/50% sucrose solution gradient; and (F): 20%/50% sucrose solution gradient;

Fig. 8 shows characterization of a goji chromoplast in accordance with Example 7 of the present disclosure; where (A): Polarized light microscopy (PLM) image of the goji chromoplast in bright field with a scale bar of 25 $\mu$m; (B): PLM image of the goji chromoplast in a polarized light mode with a scale bar of 25 $\mu$m; (C): transmission electron microscopy (TEM) image of the goji chromoplast with a scale bar of 500 nm, with a double membrane annotated by the arrow and tubular substructures annotated by the arrow heads; and (D): particle size distribution of a chromoplast dispersion;

Fig. 9 shows OM images of chromoplasts separated from a *Physalis alkekengi* fruit (a), a carrot (b) and a tomato (c), where the chromoplasts are annotated by the arrow heads;

Fig. 10 is a TEM image showing an ultrastructure of a chromoplast separated from the *Physalis alkekengi* fruit; where crystals are annotated by the arrows, g indicates plastoglobules, *m* indicates mitochondria, *st* indicates starch granules, *t* indicates tubular structures, and *th* indicates thylakoids;

Fig. 11 shows characterization of the chromoplast separated from a *Physalis pubescens* fruit;

Fig. 12 is a TEM image showing an ultrastructure of the chromoplast separated from the *Physalis pubescens* fruit;

Fig. 13 is a photograph of the biscuit containing a water-soluble chromoplasts;

Fig. 14 is a photograph of the bread containing the water-soluble chromoplasts;

Fig. 15 is a photograph of the soft candy containing the water-soluble chromoplasts;

Fig. 16 is a photograph of the beverage containing the water-soluble chromoplasts;

Fig. 17 is a photograph of the mayonnaise containing the water-soluble carotenoid ingredient;

Fig. 18 is a photograph of the jelly containing the water-soluble chromoplasts (left: without apple juice concentrate;

right: with additional apple juice concentrate);
Fig. 19 is a photograph of the mooncake containing the water-containing chromoplasts.

## DETAILED DESCRIPTION OF EMBODIMENTS

The embodiments described below are merely illustrative of the present disclosure, and are not intended to limit the scope of this application.

Unless otherwise specified, the technical approaches used in the description are all existing technical means in the art, and the raw materials are commercially available.

The quantitative analysis is performed by high-performance liquid chromatography (HPLC). A centrifuge tube containing a freeze-dried crude chromoplast extract is weighed, added with about 10 mL of an extraction solvent (methanol/ethyl acetate/petroleum ether, 1:1:1, v/v/v, all containing 0.1 g/L butylated hydroxyanisole (BHA) and 0.1 g/L butylated hydroxytoluene (BHT)), and subjected to extraction using an ultrasonic disruptor for 30 s to obtain a sample. The sample is placed in an ice bath, ultrasonically extracted, and then centrifuged (3,000×g, 5 min) to collect a supernatant. The supernatant was pipetted into a brown bottle. The extraction is repeated until the sample is colorless. The supernatants are combined and dried in nitrogen flow to obtain a dried extract. The dried extract is dissolved in a mixed solution of methanol and methyl tert-butyl ether (1:1, v/v), filtered through a 0.45-$\mu$m polytetrafluoroethylene (PTFE) membrane into a brown vial, and analyzed by HPLC. A YMC Carotenoid™ (C30) reverse-phase column (250 mm×4.6 mm, 3 $\mu$m) coupled with a YMC Carotenoid™ (C30) guard column with the same material is used for HPLC separation. The analysis is performed at 40°C and a flow rate of 1 mL/min, where a mobile phase A is methanol/ tert-butyl methyl ether (tBME)/water (80:18:2, v/v/v), and a mobile phase B is methanol/tBME/water (8:90:2, v/v/v). The elution gradient is programmed as follows: the proportion of the mobile phase B is increased from 0% to 30% in 5 min, from 30% to 86% in 30 min, from 86% to 100% in 2 min, decreased from 100% to 0% in 4 min, and maintained at 0% for 4 min, with a total time of 45 min. The chromoplast in the extract is quantified using (all-E)-zeaxanthin (ZEA), zeaxanthin monopalmitate (ZMP) and zeaxanthin dipalmitate (ZDP).

Data processing and analysis are performed as follows. The sum of weights of ZEA, ZMP and ZDP is taken as the total weight of goji pigments. All experiments are performed in triplicate, and extraction rate of the goji chromoplasts and the purity of carotenoids in goji chromoplasts are calculated using Microsoft Excel® 2019 through the following equations:

$$\text{Extraction rate (\%)} = \frac{\text{Weight of goji pigments in the crude chromoplast extract}}{\text{Weight of goji pigments extracted by organic reagent}} \times 100\%$$

$$\text{Purity (\%)} = \frac{\text{Weight of goji pigments in the crude chromoplast extract}}{\text{Weight of the crude chromoplast extract}} \times 100\%$$

The one-way analysis of variance (ANOVA) is conducted on a SPSS® data analysis software, and the statistical significance analysis is performed using a Duncan method, with a significant level $p$ of 0.05.

## EXAMPLE 1

The process conditions were optimized through a single factor experiment.

After removal of stems, fresh goji (*Lycium barbarum L.*) berries were washed, weighed, mixed with an extraction solvent at a preset solid-liquid ratio (w/v, g/mL), homogenized by a spiral juice extractor (power: 300 W), where the juice extractor was intermittently operated 4 times, each for 1 s, and the solid-liquid ratio is a ratio of a weight of the plant tissue to a volume of the extraction solvent. The mixture was filtered through two layers of filter cloths to collect a filtrate. The filtrate was transferred to a centrifuge tube, which was weighed and marked in advance. The filtrate was centrifuged at 4°C and 3,000×$g$ for 20 min. A supernatant was discarded, and a precipitate was collected as the crude goji chromoplast extract. The crude goji chromoplast extract was placed in a refrigerator at -80°C for 10 h, and then freeze-dried in a freeze dryer for 48 h. The obtained goji chromoplast was quantified to determine the optimal extraction conditions.

Selection of extraction solvent

Four extraction solvents were selected, which were purified water, the sucrose solution, the PBS (0.01 M, pH 7.2-7.4) and the sorbitol extraction buffer (containing 0.0018 mol/L of ethylenediaminetetraacetic acid disodium salt (EDTA-Na$_2$) and 50 mL/L of a 4-(2-Hydroxyethyl)-1-piperazine ethanesulfonic acid (HEPES) buffer). In order to ensure that the goji chromoplast with a large amount of carotenoids would not be destroyed, concentrations of the sucrose solution and the sorbitol extraction buffer were both 0.33 mol/L.

Four fresh goji materials, each weighing 10 g, were respectively added with 100 mL of the four extraction solvents (i.e., the solid-liquid ratio was 1:10). Each mixture was homogenized by a spiral juice extractor (power: 300 W, intermittent operation 4 times, each for 1 s), and filtered through two layers of Miracloth™ to collect the filtrate. The filtrate was transferred to a centrifuge tube which was weighed and marked in advance, and centrifuged. A supernatant was discarded, and the precipitate was collected as a crude goji chromoplast extract, which was stored in a refrigerator at -80°C for 10 h and then freeze-dried in a freeze dryer for 48 h.

Selection of solid-liquid ratio

Five fresh goji samples, each weighing 10 g, were respectively added with 50 mL, 100 mL, 150 mL, 200 mL and 250 mL of the 0.01 M PBS (i.e., the solid-liquid ratios were 1:5, 1:10, 1: 15, 1:20 and 1:25, respectively). Each mixture was homogenized by a spiral juice extractor (power: 300 W, intermittent operation 4 times, each for 1 s), and filtered through two layers of Miracloth™ to collect the filtrate. The filtrate was centrifuged, and the supernatant was discarded, and the precipitate was collected as the crude goji chromoplast extract. The crude goji chromoplast extract was stored in a refrigerator at -80°C for 10 h and then freeze-dried in a freeze dryer for 48 h.

Selection of filter cloth

Five fresh goji samples, each weighing 10 g, were respectively added with 100 mL of the PBS (0.01 M) (i.e., the solid-liquid ratio was 1:10). The mixtures were homogenized by a spiral juice extractor (power: 300 W, intermittent operation), and respectively filtered through 2 layers of ordinary filter cloth, 2 layers of 80-mesh cheese cloth, 2 layers of 120-mesh cheese cloth, 2 layers of 200-mesh cheese cloth, and 2 layers of Miracloth™ to collect filtrates. The filtrates were respectively transferred to weighed and marked centrifuge tubes and centrifuged. After centrifugation, the supernatants were discarded, and precipitates were respectively collected as crude goji chromoplast extracts, which were stored in a refrigerator at -80°C for 10 h and then freeze-dried in a freeze dryer for 48 h.

The freeze-dried crude goji chromoplast extracts obtained by the above single factor experiment were quantitatively analyzed by means of HPLC. The extraction rate of chromoplasts and purity of goji pigments in chromoplasts were shown in Fig. 1. As shown in (A) and (B) of Fig. 1, under the same conditions, the extraction rate of the goji chromoplast and purity of goji pigments in chromoplasts extracted with the PBS were significantly higher than those of other groups, indicating that the PBS (0.01M, pH 7.2-7.4) had the best effect on goji chromoplast extraction. The extraction rate of the goji chromoplast and purity of goji pigments in chromoplast extracts obtained by adding the fresh goji to the PBS (0.01M, pH 7.2-7.4) at solid-liquid ratios of 1:5, 1:10, 1:15, 1:20 and 1:25, respectively, were shown in (C) and (D) of Fig. 1. It can be seen that extraction rate of the goji chromoplast and purity of goji pigments in chromoplasts extracted with the PBS at a solid-liquid ratio of 1:10 was significantly higher than that of other groups. There was no significant difference in the extraction rate of the goji chromoplasts at solid-liquid ratios of 1:10, 1:15, 1:20 and 1:25, which were all significantly higher than the extraction rate at a solid-liquid ratio of 1:5. From the perspective of saving solvent, 1:10 should be selected as the appropriate solid-liquid ratio for goji chromoplast extraction. The purity and extraction rate of chromoplasts in the crude goji chromoplast extracts obtained with different filter cloths were shown in (E) and (F) of Fig. 1. It can be seen that under the same conditions, the extraction rate of the goji chromoplast and purity of goji pigments obtained by filtering with the ordinary filter cloth were significantly higher than those of other groups.

The single factor experiment was adopted herein to determine the process conditions of natural goji chromoplast extraction technique. It was concluded that the best effect on goji chromoplast extraction was achieved under the conditions that the extraction solvent was the PBS (0.01 M, pH 7.2-7.4), the solid-liquid ratio was 1: 10, and the filter cloth was an ordinary filter cloth.

EXAMPLE 2

Provided herein was a method for extracting a goji chromoplast using fresh goji as a raw material.

Step (1) The fresh goji was mixed with an extraction solvent, and homogenized by a spiral juice extractor (the conditions were the same as those in Example 1). The extraction solvent was a PBS (0.01M, pH 7.2-7.4) at a solid-liquid ratio of 1: 10.

Step (2) The homogenized product was filtered through 2 layers of ordinary filter cloth to collect a filtrate.

Step (3) The filtrate was subjected to centrifugal separation at 4°C. A supernatant was discarded, and a precipitate was collected as a crude goji chromoplast extract. The centrifugal separation was performed at $3,000 \times g$ for 20 min.

Step (4) The crude goji chromoplast extract was subjected to freeze-drying with the conditions being the same as in Example 1.

Extraction effect: The obtained goji chromoplast had an extraction rate of 69.3% and a goji pigments purity of 5.7%.

## EXAMPLE 3

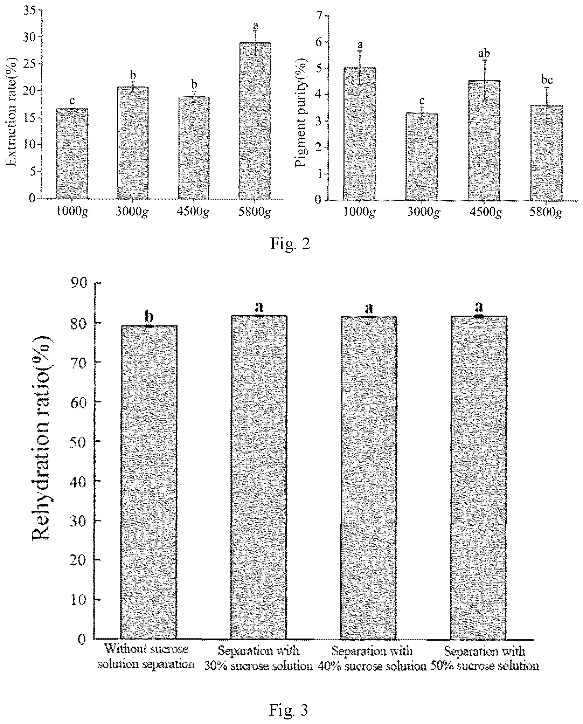

Provided herein was a method for extracting a goji chromoplast using dried goji as a raw material, with the steps being basically the same as those in Example 2, except that in step (3), the centrifugal separation was performed at $1,000 \times g$, $3,000 \times g$, $4,500 \times g$ and $5,800 \times g$, respectively. Fig. 2 showed the extraction rate and goji pigments purity of the product under different centrifugal conditions.

At $5,800 \times g$, the extraction rate of chromoplasts reached the highest, which was $28.99 \pm 2.30\%$, but the purity of pigments was only $3.61 \pm 0.69\%$. At $1,000 \times g$, the purity of pigments reached the highest, which was $5.02 \pm 0.64\%$, but the extraction rate of chromoplast was only $16.00 \pm 1.78\%$. The greater the centrifugal force, the more plant fibers and cell fragments will settle, thereby affecting the purity. At the same time, the chromoplasts or broken parts containing carotenoids will also settle, resulting in an increase in the extraction rate.

Compared with Examples 1 and 2, it can be seen that the fresh goji had higher extraction rate and purity than the dried goji. Therefore, the subsequent separation experiments were carried out with the fresh goji.

## EXAMPLE 4

Provided herein was a method for extracting a natural goji chromoplast.

Step (1) A fresh goji was mixed with an extraction solvent, and homogenized by a spiral juice extractor (power: 300 W, intermittent operation 4 times, each for 1 s). The extraction solvent was a PBS (0.01M, pH 7.2-7.4) at a solid-liquid ratio of 1:10.

Step (2) The homogenized product was filtered through two layers of ordinary filter cloth to collect a filtrate.

Step (3) The filtrate was subjected to centrifugal separation at 3-5°C. A supernatant was discarded, and a precipitate was collected as a crude goji chromoplast extract (paste product). The centrifugal separation was performed at $3,000 \times g$ for 15-20 min.

Step (4) The crude goji chromoplast extract was subjected to freeze-drying and gradient separation with sucrose solutions varying in concentration. The freeze-drying was performed as follows. The crude goji chromoplast extract was stored in a refrigerator at -80°C for 10 h, then taken out and freeze-dried in a freeze dryer for 48 h (the freeze-drying was adopted as a storage method, and the rehydration ratio was determined after freeze-drying, resulting in an excellent rehydration effect).

The gradient separation with the sucrose solutions was performed as follows. After supernatant discarding, the crude goji chromoplast extract was resuspended with the PBS in a centrifuge bottle to collect a resuspension solution.

30 wt.%, 40 wt.% and 50 wt.% sucrose solutions were prepared and transferred into 50 mL centrifuge tubes, 10 mL per tube, respectively added with 5 mL of the resuspension solution and horizontally centrifuged at 4°C and $5,000$-$5,800 \times g$ for 30-45 min. A chromoplast-enriched layer in each separation system was pipetted into a beaker, dispensed into a weighed and marked centrifuge tube, diluted with the PBS, and centrifugated at 4°C and $3,000 \times g$ for 15-20 min. The centrifugation was repeated twice, and the supernatant was discarded. The precipitate was collected as the goji chromoplast extract.

Another crude goji chromoplast extract was directly resuspended with the PBS without being freeze-dried, which was marked as a goji chromoplast extract without sucrose solution separation.

The water solubility and oil solubility of the goji chromoplast extract without sucrose solution separation, the goji chromoplast extracts separated with the 30 wt.%, 40 wt.% and 50 wt.% sucrose solutions, and the goji chromoplast extracted with an organic reagent were tested. Purified water was used as a water-soluble reagent, and petroleum ether was used as an oil-soluble reagent.

Experimental Results and Discussion

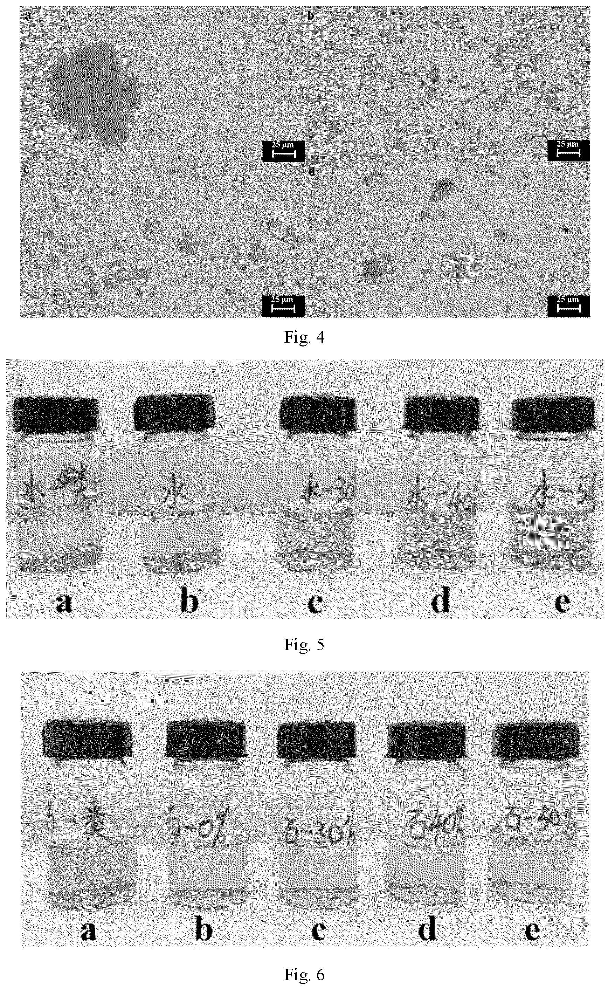

Optical microscope (OM) observation of goji chromoplasts: The goji chromoplast extract without sucrose solution separation and the goji chromoplast extracts separated with the 30 wt.%, 40 wt.% and 50 wt.% sucrose solutions were observed using a microscope. The results were shown in Fig. 4. It can be seen that the orange area was reduced after the sucrose solution separation, indicating that the content of the goji chromoplast was reduced, while the integrity of the chromoplasts was increased to varying degrees.

Observation on the solubility of goji chromoplasts: A certain amount of purified water and petroleum ether were added to the goji chromoplast extract without sucrose solution separation, the goji chromoplast extracts separated with the 30 wt.%, 40 wt.% and 50 wt.% sucrose solutions, and the goji chromoplast extracted with the organic reagent, respectively, ensuring that the carotenoid concentration in each sample was about 24.9 nmol/mL. The solubility was observed, and the results were shown in Figs. 5 and 6.

As shown in Fig. 5, after being dissolved in purified water respectively, the goji carotenoid extracted with the organic reagent was yellow with precipitation, the goji chromoplast extract without sucrose solution separation was light orange-red with a small amount of insoluble matter suspended in water, and the goji chromoplast extracts separated with the sucrose solutions were orange-red and precipitate-free.

As shown in Fig. 6, after being dissolved in petroleum ether respectively, both the goji carotenoid extracted using organic solvents and the chromoplasts extracts separated with the sucrose solutions were yellow, without any obvious precipitation. However, the carotenoids extracted with organic solvents exhibited the darker color in petroleum ether.

Determination of the rehydration ratio of goji chromoplast: As shown in Fig. 3, the rehydration ratio of goji chromoplast extracts separated with the sucrose solutions were significantly higher than that of the goji chromoplast extract without sucrose solution separation. Combined with the analysis of the OM observation results, the reason was that the chromoplasts in the goji chromoplast extracts separated with the sucrose solutions had higher integrity, which can better protect the goji chromoplasts from being destroyed in subsequent operations, and thus had better hydrophilicity.

## EXAMPLE 5

Provided herein was a method for extracting a natural goji chromoplast, with the steps being substantially the same as those in Example 4, where the weight concentration of the sucrose solution in step (4) was 30%.

## EXAMPLE 6

Considering the application in the food industry, the national standard allows food-grade solvents to be sucrose and sorbitol. Therefore, sorbitol and sucrose were used as extraction solvents in subsequent experiments, and there was no significant difference in the extraction effects of the two.

Chromoplasts have a phospholipid bilayer membrane similar to liposomes, which is more advantageous in improving the water solubility and stability of chromoplasts. Based on the above extraction experiments, the method for extracting the chromoplast was further optimized.

Step (1) Tissues from clear carotenoid-rich plant were separated and collected. The plant tissues were, but not limited to, goji berry, *Physalis alkekengi* fruit, *Physalis pubescens* fruit, marigold, sweet potato, daffodil, papaya, watermelon, corn, pepper, citrus, pumpkin, tomato, carrot, mango and palm fruit. Each sample was added with a first extraction solvent at a solid-liquid ratio of 1:10 (w/v, g/mL). The first extraction solvent was a sorbitol extraction buffer, with a concentration of 0.33 mol/L (containing 0.0018 mol/L EDTA-Na$_2$ and 50 mL/L HEPES buffer). The mixture was homogenized by a spiral juice extractor (power: 300 W, intermittent operation 4 times, each for 1 s). The raw material used herein was a fresh goji sample after removal of stems and washing.

Step (2) The homogenized product was filtered through a filter cloth to collect a filtrate. The filter cloth was an ordinary filter cloth arranged in 2 layers.

Step (3) The filtrate was transferred to a weighed and marked centrifuge tube, and centrifuged at 4°C and 3,000×$g$ for 20 min. A supernatant was discarded, and a precipitate was collected as the crude chromoplast extract.

Step (4) The crude chromoplast extract was resuspended with a second extraction solvent, and further subjected to sucrose gradient separation to obtain a purified chromoplast extract. The second extraction solvent was a sorbitol extraction buffer.

The separation with the sucrose gradient in step (4) was performed as follows. The crude chromoplast extract was resuspended with the sorbitol extraction buffer to collect a resuspension solution. The resuspension solution was added to the sucrose solution followed by horizontal centrifugation at 3-5°C and 4,000-5,800×$g$ for 25-50 min, where a volume ratio of the resuspension solution to the second sucrose solution is 1:2-3. A chromoplast-enriched layer was pipetted into a beaker, diluted with the sorbitol extraction buffer at pH 7.5 (a dilution of 1:10), and then subjected to second centrifugation at 3-5°C and 3,000-6,000 ×$g$ for 10-30 min for sucrose removal. The steps of sucrose removal were repeated 1-2 times, and the supernatant was discarded. The precipitate was collected as the purified goji chromoplast extract (referred to as purified extract). A weight concentration of the sucrose solution was in two gradients of 5-20 wt.%/50 wt.%. The addition of the sucrose solution was performed as follows. A first sucrose solution with a first gradient concentration of 50 wt.% was added first, and then a second solution with a second gradient concentration was added. The second gradient concentration was selected from 5 wt.%, 7.5 wt.%, 10 wt.%, 12 wt.%, 15 wt.% and 20 wt.% respectively. A volume ratio of the first sucrose solution to the resuspension solution and a volume ratio of the second sucrose solution to the resuspension solution were both 1: 1.

The first centrifugation in step (4) was performed by centrifugating at 5,800×$g$ for 30 min and horizontally centrifugating at 4°C. The second centrifugation was performed by centrifugating at 3,000×$g$ for 20 min, which was repeated 1-2 times, so as to collect the precipitate as the purified extract.

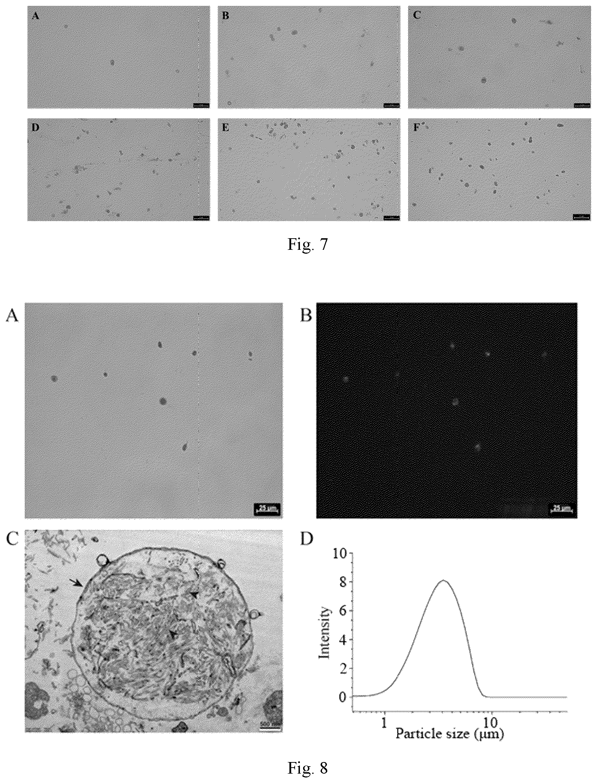

The OM image of the goji chromoplast extract was shown in Fig. 7. It can be seen that the higher sucrose gradient, the more chromoplasts there were. Moreover, compared with the 12%/50% and 15%/50% sucrose solution gradients, the purity of chromoplast extract extracted with the 20%/50% sucrose solution gradient was higher, with less cell fragments and impurities. Therefore, the 20%/50% sucrose solution gradient were selected for subsequent experiments.

## EXAMPLE 7

Provided herein was a method for extracting natural goji chromoplasts, with the steps being substantially the same as those in Example 6, where the weight concentration gradient of the sucrose solutions was 20%/50%. The volume ratios of the two sucrose solutions to the resuspension solution were both 1: 1.

The morphology of the chromoplast obtained herein was subjected to OM observation. As shown in (a) of Fig. 8, the chromoplasts of goji fruit were orange in bright field, spherical or elliptical in shape, and 4-6 μm in diameter. In the polarized light mode, a special-colored filamentous texture was observed ((b) of Fig. 8). Since the nematic carotenoid molecules in the tubular structure of the chromoplasts can exhibit optical anisotropy and dichorism, they usually present fibrous or striped optical textures under a polarized light microscopy (PLM). Therefore, it can be inferred that the carotenoid molecules in the chromoplast tubes may be deposited in a state of nematic liquid crystals. In Fig. 4, there were relatively more chromoplast fragments with a high aggregation degree. In contrast, the chromoplasts in Fig. 8 were more intact and clearer without aggregation.

Through transmission electron microscopy (TEM) observation on the chromoplasts separated from the goji, abundant tubular ultrastructures can be observed (indicated by arrows in (c) of Fig. 8). As lipophilic molecules, carotenoids are assembled into nanoscale tubular structures and encapsulated in the intact hydrophilic bilayer membrane of the chromoplasts (indicated by arrows in (c) of Fig. 8). The chromoplast dispersion liquid exhibited a uni-modal distribution of particle size in a range of 1-10 μm (as shown in (d) of Fig. 8). An average diameter of the chromoplasts calculated by particle size analysis was 3.53 ± 0.11 μm ($D_{4,3}$), which was consistent with the results of microscopic observation.

## EXAMPLE 8

Provided herein was a method for extracting natural goji chromoplasts, with the steps being substantially the same as those in Example 7, except that the extraction solvent in step (1) was a 0.33 mol/L sucrose solution.

## EXAMPLE 9

Among plant tissues, *Physalis alkekengi* fruits (*P. alkekengi var. franchetii (Mast.) Makino*), also known as Chinese lantern is an herb widely used in China. Fruits of *Physalis pubescens,* also known as hairy ground-cherry, is native to South America. The *Physalis alkekengi* and *Physalis pubescens* grow red-orange or light-yellow edible fruits, respectively.

Provided herein was a method for extracting chromoplasts, with the steps being substantially the same as those in Example 6, except that the plant tissues used in step (1) were collected from *Physalis alkekengi* fruits.

## EXAMPLE 10

Provided herein was a method for extracting chromoplasts, with the steps being substantially the same as those in Example 6, except that the plant tissues used in step (1) were collected from *Physalis pubescens* fruits.

## EXAMPLES 11-12

Provided herein was a method for extracting chromoplasts, with the steps being substantially the same as those in Example 6, except that the plant tissues used in step (1) were respectively from carrots and tomatoes. For ease of operation, the carrots or tomato was cut into pieces before put into the spiral juice extractor.

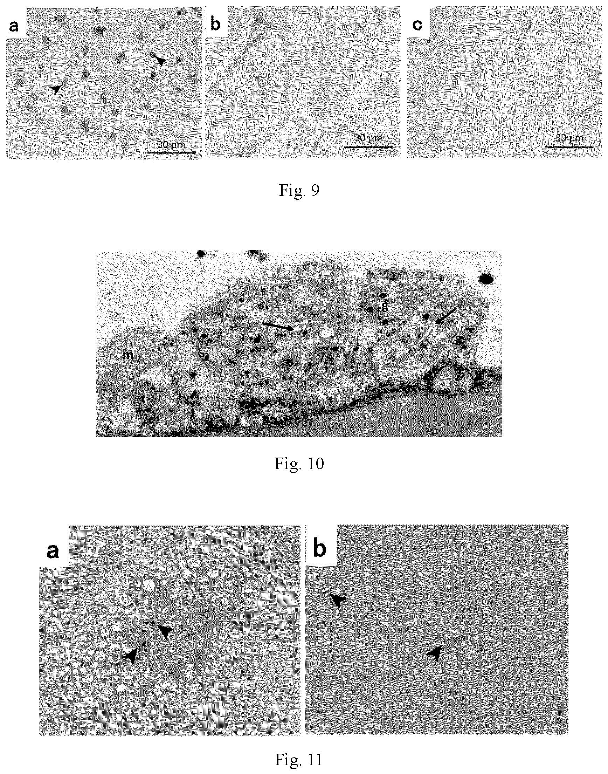

The chromoplasts in extracts in Examples 9-12 were structurally observed using OM and TEM. Fig. 9 showed the OM observation results of the chromoplast structure of the *Physalis alkekengi* fruit. It can be seen that the chromoplasts of the *Physalis alkekengi* fruit were red ((a) of Fig. 9). Compared with the typical needle-shaped crystal structure of carotenoids deposited in the extracts of the carrot ((b) of Fig. 9) and tomato ((c) of Fig. 9), it can be seen that the chromoplast in the *Physalis alkekengi* fruit ((a) of Fig. 9)) did not have a typical crystal structure, but may be deposited in a form of spherical or tubular structures. The specific ultrastructure required TEM observation, as shown below.

The ultrastructure of the chromoplast extracted from the *Physalis alkekengi* fruit was further observed by TEM, and the results were shown in Fig. 10. The chromoplast was filled with small crystal structures, a large number of plastoglobules, and a small number of tubular structures. Therefore, deposition forms of the carotenoids in the *Physalis alkekengi* fruit were plastoglobules, crystal structures and tubular structures.

Moreover, it was worth noting that the chromoplast in the *Physalis alkekengi* fruit had a much smaller crystal size than that of the relatively large needle-shaped crystals in the carrot and tomato ((b) and (c) of Fig. 9), and had no visible crystal structure under the OM ((a) of Fig. 9). Such a crystal structure is called submicroscopic crystals, which is a carotenoid deposition structure that is different from the classic crystal structure.

Fig. 11 showed the OM observation results of the morphology of the chromoplast extracted from the *Physalis pubescens* fruit. As shown in Fig. 11, some crystals were present in the chromoplast in the *Physalis pubescens* fruit. However, the comparison showed that the size of the crystals in the *Physalis pubescens* fruit was significantly smaller than that in the carrot ((b) of Fig. 9) and tomato ((c) of Fig. 9).

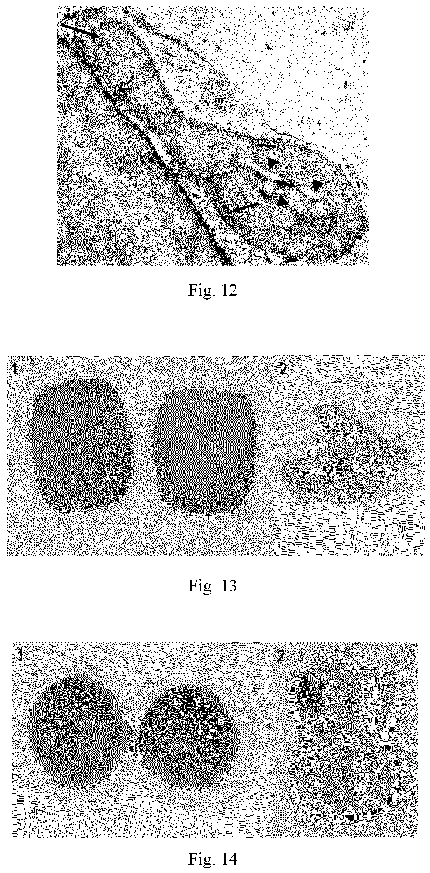

Fig. 12 showed the TEM observation results of the ultrastructure of the chromoplast extracted from the *Physalis pubescens* fruit. The results showed that in addition to the large plastoglobules, the chromoplast in the *Physalis pubescens* fruit had classic crystal structures, which were generally located on both sides of the wavy inner membrane, as indicated by the arrow heads in Fig. 12.

**APPLICATION EXAMPLE**

The purified chromoplast extract obtained in Example 7 was in a form of a paste, which was dissolved in water to obtain a water-soluble carotenoid ingredient. Chromoplasts rich in different carotenoids can be used as natural water-soluble carotenoid ingredients varying in color. For example, chromoplasts rich in lycopene can be used as red natural water-soluble carotenoid ingredients, chromoplasts rich in lutein dipalmitate or zeaxanthin dipalmitate can be used as red-orange natural water-soluble carotenoid ingredients, and chromoplasts rich in lutein or zeaxanthin can be used as yellow natural water-soluble carotenoid ingredients. In addition, for functional products, the addition amount of chromoplasts is adjusted according to the pigment concentration required by the product. For coloring products, the addition amount of chromoplasts shall be adjusted according to the desired color of the product while meeting the requirements of GB 2760-2014 "National Food Safety Standard for Food Additive Use".

1. Application in baked products

The purified chromoplast extract can be applied to baked food such as biscuits, bread, mooncakes, macarons and egg rolls. A biscuit was produced as follows. 75 g of butter, 50 g of sugar, 15 g of egg liquid, 4 mg of the purified chromoplast extract and 115 g wheat flour were mixed, frozen for 1 h, cut into thin slices and baked at 165°C for 20 min. The product was shown in Fig. 13.

A bread was produced as follows. 120 g of ice milk, 50 g of egg liquid, 3 g of yeast, 30 g of sugar, 250 g of high-gluten flour, 2 g of salt, 20 g of butter and 10 mg of the purified chromoplast extract were prepared into a 20 mg/kg solution (i.e., 1 kg of ingredients contained 20 mg of the purified chromoplast extract obtained in Example 7, and the rest was water).

The ice milk, egg liquid, yeast, sugar and high-gluten flour were added to a bread machine for kneading. The salt and butter were added halfway, and the kneading was continuously performed until the dough was in a state that a thin film can be pulled out.

The kneaded dough was put into an oiled basin, covered with plastic wrap, and fermented at 26-32°C for 90 min. After fermentation, the dough was pressed to exhaust, divided into 8 equal portions, put into a baking tray and covered with plastic wrap for the second fermentation for 20-30 min. The 8 portions of dough were each brushed with egg liquid, baked in an oven at 170°C for 20 min. The obtained product was shown in Fig. 14.

At present, in the production of bread, carotenoids are mixed with oil to promote the dissolution of the carotenoids into the food system. Adding oil results in high calorie content of food and insufficient solubility of carotenoids. There is also a technique that makes carotenoids into an embedding delivery system and adds it to bread. However, these systems are external chemical synthesis and have poor biocompatibility. The chromoplast used in the present disclosure is in the form of a natural carotenoid embedding system, which is healthy and more conducive to the absorption of carotenoids.

2. Application in candy products

Gelatinization: 45 g of gelatin powder was added to 70 g of water, stirred and soaked. Sugar boiling: 250 g of an apple juice concentrate was added to 20 g of water to obtain a mixture. The mixture was heated to 110-120°C.

Preparation: 5 g of a lemon juice concentrate and 10 mg of the purified chromoplast extract were added to obtain a syrup.

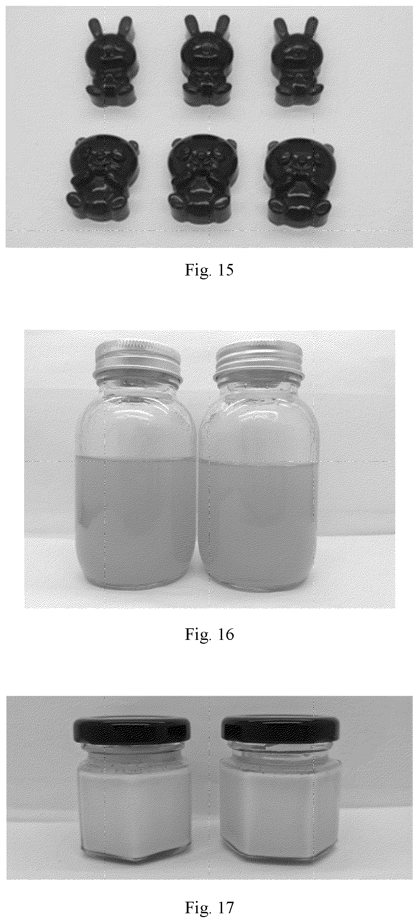

Bottling and pouring: The syrup was transferred into a squeeze bottle, poured for molding, cooled and demolded. The obtained product was shown in Fig. 15.

3. Application in beverage products

The purified chromoplast extract can be applied to beverages such as yogurt, milk drinks, and fruit-vegetable beverages. A fruit-vegetable beverage was produced as follows. 2 mg of the purified chromoplast extract was evenly mixed with water, appropriate amount of white sugar, 1.5% citric acid and a 0.1% xanthan gum solution. The mixture was transferred into a transparent glass bottle with a volume of 50 mL. The obtained product was shown in Fig. 16.

In another application involving fruit juice, the purified chromoplast extract or the water-soluble carotenoid ingredient thereof can be added to fruit-vegetable juices, such as apple juice, carrot juice and tomato juice. Adding a small amount of the purified chromoplast extract, such as less than 0.05 g/kg, can brighten the color of the juice and help maintain a rich appearance.

4. Application in meat products

A small amount of the purified chromoplast extract was added, such as less than 0.02 g/kg, for brightening or coloring emulsified sausage or red sausage.

5. Application in sauces such as margarine and mayonnaise

Water-soluble carotenoid ingredients can also be used to brighten or color sauces such as butter (adding less than 1.0 g/kg of the purified chromoplast extract), and mayonnaise (adding less than 2.0 g/kg of the water-soluble carotenoid ingredient). Sauces such as butter and mayonnaise can be used for making bread, or cake.

2 egg yolks were put in a bowl, and added with 30 mg of the purified chromoplast extract and 15 g of sugar. The mixture was homogenized with a whisk, added with 10 mL of olive oil and 1 teaspoon of white vinegar, and then continuously stirred. This process was repeated until mayonnaise with appropriate thickness was obtained. The obtained product was shown in Fig. 17.

6. Application in jelly

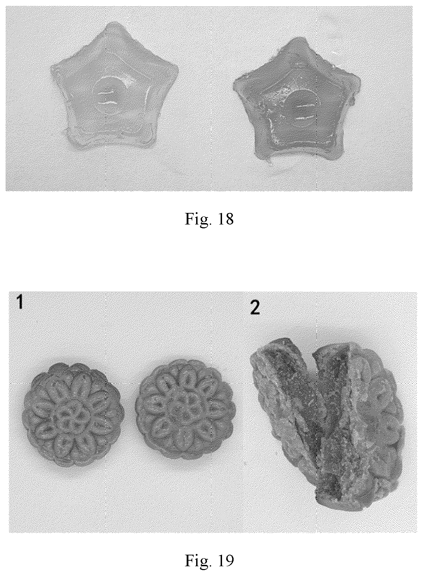

150 g of milk and 15 g of sugar were added into a pot and heated until bubbles appeared. 2 mg of the purified chromoplast extract, softened gelatin sheets and white sugar were added in sequence. The heat was removed after melting. The mixture was poured into a mold, refrigerated for 4 h, and then demolded. The obtained product was shown in Fig. 18.

7. Application in Chinese pastries

28% high-gluten flour, 28 wt.% low-gluten flour, 30 wt.% syrup, 13 wt.% oil, 1 wt.% alkaline water and 20 mg/kg of the purified chromoplast extract were used as ingredients. Alkaline water, oil, syrup, and the water-soluble carotenoid ingredient were mixed evenly, kneaded into a dough, rolled into a ball, flattened, wrapped with a filling, placed in a mold, and baked at 180°C for 20 min. The obtained product was shown in Fig. 19.

8. Application in cosmetics

In this embodiment, the purified chromoplast extract was formulated into a dermatologically acceptable natural water-soluble colorant. According to the usage requirements recorded in the "Catalogue of Used Cosmetic Raw Materials (Edition 2021)", 1.8% lutein-rich purified chromoplast extract, 3% astaxanthin-rich purified chromoplast extract, or lycopene or β-carotene-rich purified chromoplast extract (without clear dosage requirements) can be added for skin coloring or sunscreen and moisturizing products such as lipstick, eye shadow and blush.

9. Application in functional products

In this embodiment, the purified chromoplast extracts rich in lutein or zeaxanthin can be prepared into lutein or zeaxanthin soft capsules or tablets for preventing eye diseases or dietary supplements. The purified chromoplast extracts rich in astaxanthin can be prepared into oral liquids or capsules for enhancing the sunscreen mechanism or antioxidant capacity of the human body. According to the reference intake of dietary nutrients for Chinese residents, functional products rich in purified chromoplast extracts can be taken regularly and in moderation.

A chromoplast extract, and an extraction method and an application thereof are provided in this application. The method is performed as follows. (1) A plant tissue is used as a raw material, added with an extraction solvent, and homogenized by a spiral juice extractor. The extraction solvent is selected form the group consisting of purified water, a sucrose solution, a PBS, a sorbitol extraction buffer and a combination thereof. (2) The homogenized product is filtered through 1-3 layers of filter cloth to collect a filtrate. (3) The filtrate is subjected to centrifugal separation at 3-8°C. A supernatant is discarded, and a precipitate is collected as the crude extract. The crude extract is separated with 5-50 wt.%

sucrose solutions. A chromoplast-enriched layer is pipetted, resuspended with an extraction solvent, and centrifugated. The supernatant is discarded, and the precipitate is collected as a purified chromoplast extract. Compared with carotenoids extracted with organic reagents, the chromoplast extract obtained by the extraction technique of the present disclosure has no significant difference in oil solubility, but has significantly superior water solubility and obvious advantages in terms of rehydration ratio. Therefore, in addition to retaining the chromoplast properties, the chromoplast obtained herein also exhibits excellent water solubility, which not only facilitates the improvement of its applicability, but also is more environmentally friendly.

Obviously, modifications and variations for the technical solutions recorded in the above embodiments, or equivalent substitutions made by those of ordinary skill in the art shall fall within the scope of the disclosure defined by the appended claims.

## Claims

1. A method for extracting a chromoplast, comprising:

    (1) mixing a plant tissue with an extraction solvent followed by homogenization using a spiral juice extractor to obtain a mixture; wherein the extraction solvent is selected from the group consisting of purified water, a first sucrose solution, a phosphate buffered saline (PBS), a sorbitol extraction buffer and a combination thereof; a concentration of the first sucrose solution and a concentration of the sorbitol extraction buffer are each independently 0.3-0.4 mol/L; the sorbitol extraction buffer comprises 0.001-0.002 mol/L of ethylenediaminetetraacetic acid disodium salt (EDTA-Na$_2$) and 10-100 mL/L of a 4-(2-hydroxyethyl)-1-piperazine ethanesulfonic acid (HEPES) buffer; and the plant tissue is a carotenoid-rich tissue selected from the group consisting of goji berries, *Physalis alkekengi* fruits, *Physalis pubescens* fruits, marigold, sweet potato, daffodil, papaya, watermelon, corn, pepper, a citrus fruit, pumpkin, tomato, carrot, mango, palm fruit and a combination thereof;
    (2) filtering the mixture through a filter cloth arranged in 1-3 layers to collect a filtrate; and
    (3) subjecting the filtrate to centrifugal separation at 3-8°C, discarding a supernatant, and collecting a precipitate as a crude chromoplast extract.

2. The method of claim 1, **characterized in that** in step (1), the goji is a fresh or dried goji tissue; and/or
   a ratio of a weight of the plant tissue to a volume of the extraction solvent is 1 (g):5-25 (mL).

3. The method of claim 1, **characterized in that** in step (1), the spiral juice extractor is set to a power of 200-500 W to perform the homogenization, and is intermittently operated 2-5 times, each lasting for 1 s.

4. The method of claim 1, **characterized in that** in step (2), the filter cloth is one or two selected from the group consisting of an ordinary filter cloth, an 80-mesh cheese cloth, a 120-mesh cheese cloth, a 200-mesh cheese cloth and Miracloth.

5. The method of claim 1, further comprising:

    (4) subjecting the crude chromoplast extract to freeze-drying or separation with a second sucrose solution; wherein the freeze-drying is performed using a freeze dryer at a temperature of -30 to -50°C; and the second sucrose solution has a weight concentration of 5-50%.

6. The method of any one of claims 1-5, **characterized in that** the method comprises:

    (1) mixing the plant tissue with the extraction solvent followed by homogenization using the spiral juice extractor to obtain the mixture; wherein the extraction solvent is the PBS having a concentration of 0.01 M and a pH of 7.2-7.4, and the ratio of the weight of the plant tissue to the volume of the extraction solvent is 1 (g): 10-25 (mL);
    (2) filtering the mixture through the ordinary filter cloth arranged in 2 layers to collect the filtrate;
    (3) subjecting the filtrate to centrifugal separation at 3-5°C and 3,000-6,000×g for 10-30 min, discarding the supernatant, and collecting the precipitate as the crude chromoplast extract; and
    (4) subjecting the crude chromoplast extract to separation with the second sucrose solution having the weight concentration of 5-50%.

7. The method of claim 6, **characterized in that** the step (4) is performed through steps of:
   resuspending the crude chromoplast extract with the sorbitol extraction buffer or the PBS to collect a resuspension solution; adding the resuspension solution to the second sucrose solution followed by horizontal centrifugation at 3-5°C and 4,000-5,800×g for 25-50 min, wherein a volume ratio of the resuspension solution to the second sucrose solution is 1:2-3; pipetting a chromoplast-enriched layer followed by dilution with the sorbitol extraction buffer or the PBS and centrifugation at 3-5°C and 3,000-6,000×g for 10-30 min, discarding a supernatant, and collecting a precipitate as a purified chromoplast extract.

8. The method of claim 7, **characterized in that** in step (4), the addition of the second sucrose solution is performed by adding a 50 wt.% sucrose solution, and subsequentially adding a 5-20 wt.% sucrose solution, and a volume ratio of the 50 wt.% sucrose solution to the resuspension solution and a volume ratio of the 5-20 wt.% sucrose solution to the resuspension solution are each independently (1-1.5):1.

9. A chromoplast, **characterized in that** the chromoplast is obtained by the method of any one of claims 1-8.

10. The chromoplast of claim 9 for use of preparing a cosmetic, a mooncake, a candy snack, a beverage, a baked product, or a meat product.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

<div align="center">

**INTERNATIONAL SEARCH REPORT**

</div>

| | International application No. |
|---|---|
| | **PCT/CN2024/095878** |

| A. | CLASSIFICATION OF SUBJECT MATTER |
|---|---|

C09B61/00(2006.01)i; C09B67/54(2006.01)i

According to International Patent Classification (IPC) or to both national classification and IPC

| B. | FIELDS SEARCHED |
|---|---|

Minimum documentation searched (classification system followed by classification symbols)

IPC:C09B

Documentation searched other than minimum documentation to the extent that such documents are included in the fields searched

Electronic data base consulted during the international search (name of data base and, where practicable, search terms used)

CJFD, CNTXT, ENTXT, ENTXTC, web of science, wiley InterScience: 中国农业大学, 华中农业大学, huazhong agricultural, 有色体, 有色粒, 色素体, 色质体, 质体, 提纯, 纯化, 分离, 冻干, 过滤, 缓冲液, 溶剂, 离心, 浓度, 梯度, 蔗糖, 类胡萝卜素, 枸杞, 辣椒, 番茄, 西红柿, 胡萝卜, Chromoplasts, huazhong agriculture university, coloured body, Chromatic bady

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117801565 A (CHINA AGRICULTURAL UNIVERSITY) 02 April 2024 (2024-04-02) see claims 1-10, and description, paragraph 2 | 1-10 |
| X | WANG, Yongqiang. "Proteomic Analysis of Chromoplasts from Six Crop Species Reveals Insights into Chromoplast Function and Development" *Journal of Experimental Botany*, Vol. 64, No. 4, 10 January 2013 (2013-01-10), 949–961 see abstract, page 950, right column, and figure 1 | 1-10 |
| X | 邓昌哲 (DENG, Changzhe). "木薯块根有色体分离及其蛋白质组学的研究 (Chromoplast Isolation and Its Proteomic Analysis from Cassava Storage Roots)" *作物学报 (Acta Agronomica Sinica)*, No. 9, 22 May 2017 (2017-05-22), 1290-1299 see page 1291 to page 1292, left column | 1-10 |
| X | US 2022259128 A1 (UNIVERSITY OF CAGLIARI) 18 August 2022 (2022-08-18) see description, paragraphs 55-57 | 1-4, 9-10 |
| A | CN 101948796 A (HUAZHONG AGRICULTURAL UNIVERSITY) 19 January 2011 (2011-01-19) entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2024** | **14 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/095878** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 108728396 A (HUAZHONG AGRICULTURAL UNIVERSITY) 02 November 2018 (2018-11-02)<br>entire document | 1-10 |
| A | CN 114401775 A (UNIVERSITY OF CAGLIARI) 26 April 2022 (2022-04-26)<br>entire document | 1-10 |

Form PCT/ISA/210 (second sheet) (July 2022)

INTERNATIONAL SEARCH REPORT
Information on patent family members

International application No.

**PCT/CN2024/095878**

| Patent document cited in search report | | | Publication date (day/month/year) | Patent family member(s) | | | Publication date (day/month/year) |
|---|---|---|---|---|---|---|---|
| CN | 117801565 | A | 02 April 2024 | None | | | |
| US | 2022259128 | A1 | 18 August 2022 | EP | 4003567 | A1 | 01 June 2022 |
| | | | | WO | 2021019275 | A1 | 04 February 2021 |
| CN | 101948796 | A | 19 January 2011 | None | | | |
| CN | 108728396 | A | 02 November 2018 | None | | | |
| CN | 114401775 | A | 26 April 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **IZUMI-NAGAI, K.** ; **NAGAI, N.** ; **OHGAMI, K.** Macular pigment lutein is anti-inflammatory in preventing choroidal neovascularization. *Arteriosclerosis, Thrombosis, and Vascular Biology*, 2007, vol. 27, 2555-2562
- **LOPRESTI, A. L.** ; **SMITH, S. J.** ; **DRUMMOND, P. D.** The effects of lutein and ZEA supplementation on cognitive function in adults with self-reported mild cognitive complaints: A randomized, double-blind, placebo-controlled study. *Frontiers in Nutrition*, 2022, vol. 9, 843512
- **CLAUDIO L** ; **ILARIA B** ; **MARCO E.** Novel food colorants from tomatoes: Stability of carotenoid-containing chromoplasts under different storage conditions[J. *LWT-Food Science and Technology*, 2021, vol. 140 (11), 110725
- **WANG YONGQIANG** ; **YANG YONG** ; **FEI ZHANG-JUN et al.** Proteomic analysis of chromoplasts from six crop species reveals insights into chromoplast function and development[J. *Journal of Experimental Botany*, 2013, vol. 64 (4), 949-61